# EUROPEAN PATENT SPECIFICATION

(11) **EP 2 460 342 B1**
(45) Date of publication and mention of the grant of the patent: **14.09.2016**
(21) Application number: 10804828.1
(22) Date of filing: 30.07.2010
(51) Int. Cl.: H04M 11/00, H04L 29/06, H04L 12/46

(54) **TELEPHONIC COMMUNICATIONS WITH INTELLIGENT PROTOCOL SWITCHING**
TELEFONKOMMUNIKATION MIT INTELLIGENTER PROTOKOLLUMSCHALTUNG
COMMUNICATIONS TÉLÉPHONIQUES AVEC COMMUTATION DE PROTOCOLES INTELLIGENTE

(30) Priority: 31.07.2009 US 230434 P
(43) Date of publication of application: 06.06.2012
(73) Proprietor: BT Americas Inc., Irving, TX 75039 (US)
(72) Inventor: WATERS, Christopher M., Paolo Alto, CA 94301 (US)
(74) Representative: Nash, Roger William
(86) International application number: PCT/US2010/002138
(87) International publication number: WO 2011/014259

(56) References cited:
- WO-A1-2009/059851
- US-A1- 2001 009 554
- US-A1- 2005 094 556
- US-A1- 2006 256 771
- US-A1- 2006 256 815
- US-B1- 6 873 627

## Description

### TECHNICAL FIELD

The present application relates generally to the field of telephony and, in a specific exemplary embodiment, to a system and method of automating intelligent real-time switching between a plurality of telephonic devices each operating on dissimilar communications protocols.

### BACKGROUND

Various types of telephony have emerged over the past several years. For example, in addition to a traditional telephone or cellular phone based on a publicly switched telephony network (PSTN), Internet Protocol (IP)-based phones and softphones are becoming increasingly popular. Generically, IP-based phones and softphones are considered smart-phones. IP-based phones can include hardware-based phone systems designed to function over the Internet. Softphones are typically end-user based clients for initiating and receiving voice and video communications over an IP network with the standard functionality of most traditional telephones. Thus, a softphone can be a software program, based on a general purpose computer, for sending and receiving telephone calls over the Internet. Both IP-based phones and softphones can be coupled to a private branch exchange (PBX) through a local area network (LAN). Also, IP-based phones and softphones may be capable of being coupled to other hardware-based phones. In a telephony-based communication, each phone can be considered to be a communications end-point.

There are currently several major Internet telephony service providers. However, services between the providers are frequently not interoperable. Thus, phone calls cannot directly be placed between the providers. Also, smart-phones are frequently incapable of connecting with other end-points in certain types of network-based environments, especially networks within a corporation. For example, each end-point must share a common communications protocol and at least one common audio CODEC for communications to occur. If there is no common protocol and at least one common CODEC, then generally no communications can occur.

Communication networks may generally be divided into peer-to-peer networks and client/server networks. Peer-to-peer networks support direct communication between various end-points without the use of an intermediary device (e.g., a host or server). Communication constraints imposed by firewalls and network address translation (NAT) servers used by Internet service providers (ISPs), cellular network operators (CNOs), and corporate networks to protect and control their networks must be considered. The constraints can become especially problematic when, for example, communications originating from outside and going into a corporate network is considered.

In general, firewalls control data traffic allowed to flow through them. A large majority of firewalls allow only solicited HTTP traffic to reach a smart-phone or a personal computer (PC), while plain packet-based IP traffic (e.g., traffic based on transmission control protocol (TCP) or user datagram protocol (UDP)) is blocked. Even if a smart-phone has an HTTP server, an HTTP request sent by a remote device to the HTTP server can be blocked by these firewalls, since the HTTP message is unsolicited by the receiving phone.

NAT servers can create obstacles to even a peer-to-peer connection. For example, one peer end-point may roam across different CNOs while connected to the Internet. While roaming, the end-point is on an overlay network and will change its IP address. Consequently, the end-point will lose any socket connections that have been established to a previous IP address.

US patent application 2006/0256771 discloses that a VOIP client device such as an IP phone communicates a VOIP message to a local proxy residing on a local computing device. Upon receipt of communications from the VOIP client device, the local proxy can convert the transport protocol used for the communications. At a remote server, the transport protocol may then be converted back to the original transport protocol.

US patent application 2001/0009554 suggests that Internet telephony packets might be sent, using TCP, from a user's terminal to a point-of-presence provided by that user's Internet Service Provider. At the point-of-presence, the Internet telephony packets are converted from TCP to UDP packets. Then, at the point-of-presence of the recipient's Internet Service Provider, the UDP packets are converted back to TCP packets.

International Patent application WO 2009/059851 discloses that end-to-end TCP connections can be provided between hosts that are both behind Network Address Translators by having the sender host modify TCP packets to UDP packets, and then having the receiver host carry out inverse modifications to recover the original TCP packet.

### BRIEF DESCRIPTION OF DRAWINGS

Various ones of the appended drawings merely illustrate exemplary embodiments of the present invention and cannot be considered as limiting its scope.
Fig. 1A is a high-level network architecture illustrating an exemplary embodiment allowing intelligent protocol switching of communications;
Fig. 1B is an exemplary embodiment of an application engine subsystem to implement the intelligent protocol switching in the network architecture of Fig. 1A;
Fig. 2 is an exemplary flowchart illustrating potential protocol switching methods for the network architecture of Fig. 1A; and
Fig. 3 is a simplified block diagram of a machine in an exemplary form of a computing system within which a set of instructions, for causing the machine to perform any one or more of the methodologies discussed herein, may be executed.

### DETAILED DESCRIPTION

The description that follows includes illustrative systems, methods, techniques, instruction sequences, and computing machine program products that embody the inventive subject matter. In the following description, for purposes of explanation, numerous specific details are set forth to provide an understanding of various embodiments of the inventive subject matter. It will be evident, however, to those skilled in the art that embodiments of the inventive subject matter may be practiced without these specific details. Further, well-known instruction instances, protocols, structures, and techniques have not been shown in detail.

As used herein, the term "or" may be construed in either an inclusive or exclusive sense. Similarly, the term "exemplary" is construed merely to mean an example of something or an exemplar and not necessarily a preferred or ideal means of accomplishing a goal. Additionally, although various exemplary embodiments discussed below focus on automated protocol access between end-points, the embodiments are given merely for clarity in disclosure. Thus, any type of, for example, electronic protocol switching between a plurality of communicative media types, including various system architectures, may employ various embodiments of the intelligent protocol switching system and method described herein and are considered as being within a scope of the present invention.

Various exemplary embodiments discussed herein define systems and methods to automatically select compatible communication protocols between one or more communications networks. In an exemplary embodiment, the system, as further defined in claim 1, can include an application engine configured to couple to at least a first one of the one or more communications networks and receive a sample of an attempted communication from a first end-point. The first end-point is a telephonic device, such as an IP-phone, smart-phone, or cellular phone, used by a first user attempting to telephonically communicate with a user of a second end-point. The second end-point is also a similar or dissimilar telephonic device. The application engine includes a decoder engine that samples the attempted communications to determine a first protocol associated with the first end-point and a second protocol associated with the second end-point. A protocol conversion engine is arranged to convert the first protocol to be compatible with at least a second one of the one or more networks associated with the second protocol.

In another exemplary embodiment, a conversion method, as further defined in claim 6, to automatically select compatible communication protocols between one or more communications networks is disclosed. The method includes receiving a sample of an attempted communication from a user attempting communication with a first end-point. As above, the first end-point is a telephonic device attempting to initiate communications with a second end-point. The second end-point is also a telephonic device that is either similar or dissimilar to the first end-point. Both a first protocol associated with the first end-point and a second protocol associated with the second end-point are each determined. The first protocol is converted to be compatible with at least a second one of the one or more communications networks associated with the second protocol, thus allowing the communications between, for example, dissimilar networks, to proceed.

In another exemplary embodiment, a machine-readable storage device comprising instructions is disclosed. The instructions contained on the machine-readable storage device, when executed by one or more processors, cause the one or more processors to perform a method to automatically select compatible communication protocols between one or more communications networks. As described above, the method includes receiving a sample of an attempted communication from a user attempting communication with a first end-point. As above, the first end-point is a telephonic device attempting to initiate communications with a second end-point. The second end-point is also a telephonic device that is either similar or dissimilar to the first end-point. Both a first protocol associated with the first end-point and a second protocol associated with the second end-point are each determined. The first protocol is converted to be compatible with at least a second one of the one or more communications networks associated with the second protocol, thus allowing the communications between, for example, dissimilar networks, to proceed. Each of these exemplary embodiments, and others, is discussed in detail, below.

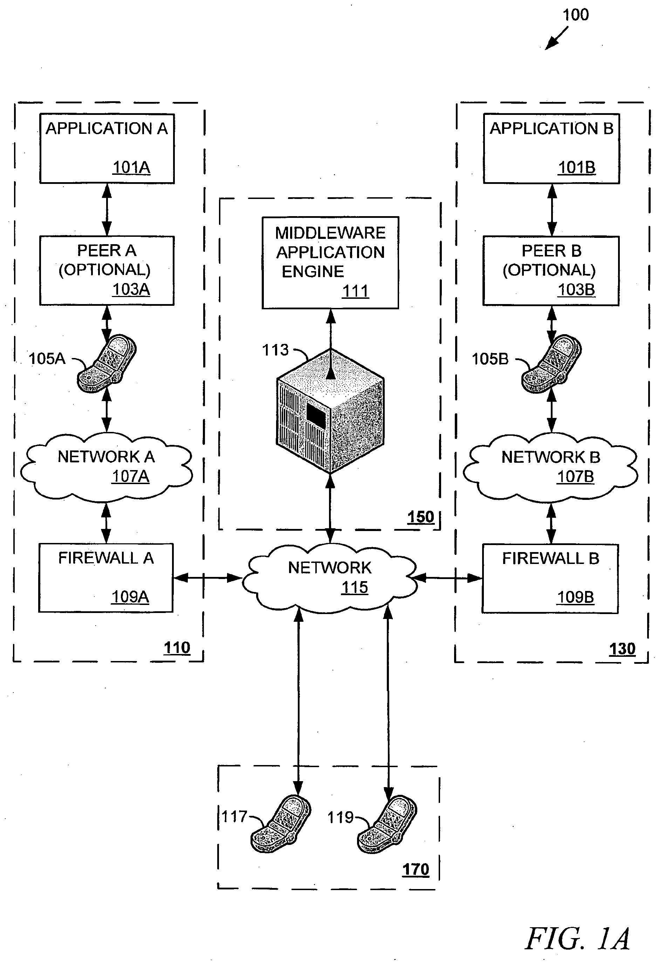

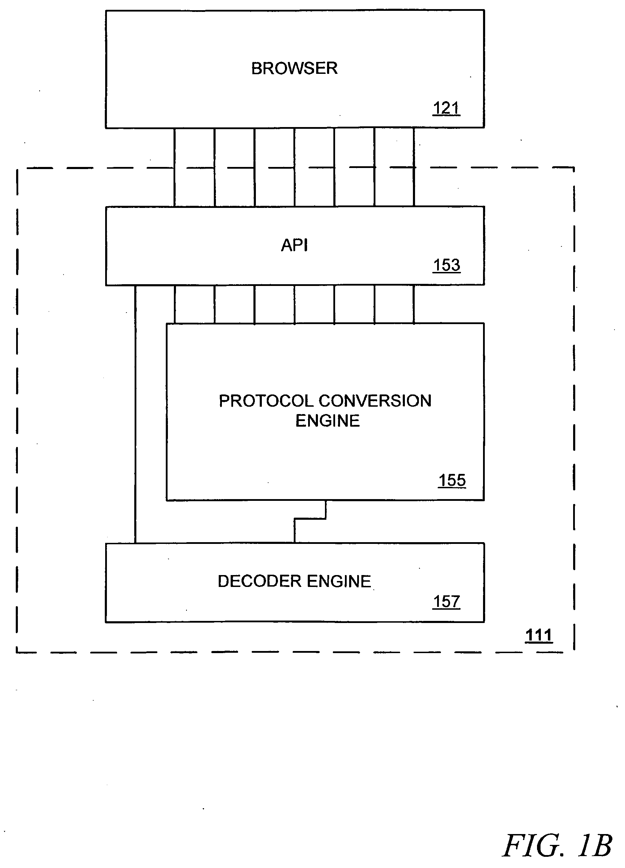

With reference to Fig. 1, a diagram of an exemplary embodiment of a high-level network architecture 100 includes a first networked environment 110, a second networked environment 130, a translation environment 150, and a peer-to-peer environment 170. The first 110 and second 130 networked environments, the translation environment 150, and the peer-to-peer environment 170 are each coupled to one another through a network 115. The network 115 can be, for example, the Internet, a hard-wired network, a wireless network, or a combination thereof. Each of the first 110 and second 130 networked environments can be, for example, different corporate environments in geographically dispersed areas. Although certain types of end-points, servers, applications, and networks are shown, a skilled artisan will recognize that more or fewer numbers of each may be involved in an actual network architecture. Additionally, each of the components may be coupled differently than the illustration depicts. For example, first 110 and second 130 networked environments each appear to have components coupled to one another in series. However, the components can be coupled to one another in parallel as well. Therefore, the high-level network architecture 100, as stated, is merely exemplary and serves generally to describe the inventive nature of the subject matter contained herein.

Each of the first 110 and second 130 networked environments include a firewall 109A, 109B, an internal network 107A, 107B, and an internal end-point 105A, 105B (e.g., a first end-point and a second end-point). Each of the internal end-points 105A, 105B can be considered to be, for example, a cell-phone, a smart-phone, an IP-phone, a standard telephone, or various combinations thereof. Further, each of the internal end-points 105A, 105B is optionally coupled to peer software 103A, 103B. The peer software 103A, 103B can be proprietary or non-proprietary software allowing certain added functionality or features to the respective internal end-points 105A, 105B coupled thereto. Moreover, the peer software 103A, 103B can be located either internal or external to the respective internal end-points 105A, 105B.

In a specific exemplary embodiment, the peer software 103A, 103B can be, for example, a MIDlet-based application. A MIDlet is a Java application framework used with a Mobile Information Device Profile (MIDP) that is typically implemented on a Java-enabled smart-phone. Further, the MIDlet can enable an application programming interface (API) for peer-to-peer communications with other peer devices (not shown).

Each of the first 110 and second 130 networked environments further includes an application package 101A, 101B either coupled to or contained within the respective internal end-points 105A, 105B. In a specific exemplary embodiment, each of the application packages 101A, 101B can help establish a communication channel between, for example, the internal end-point 105A and any other end-point inside or outside of the first networked environment 110.

As discussed above, in typical contemporary communications platforms, each of the end-points must be based upon the same protocol. Details of communications between end-points operating on non-similar protocols are given, below. In general, one end-point listens for connections, another end-point establishes a connection with the first end-point, and then both sides of the communication channel can send and receive data on that channel. Each of the application packages 101A, 101B operating on or within the respective internal end-points 105A, 105B, can listen for connections, establish a connection, and send or receive data on an established connection with at least one other end-point.

With continued reference to Fig. 1A, the translation environment 150 includes a protocol translation server 113 and a middleware application engine 111. The protocol translation server 113 generally includes one or more processors, either an internal or remote database (not shown), and storage memory. Although not shown, the middleware application engine 111 can function as a hardware, software, or firmware component within the protocol translation server 113.

The middleware application engine 111 is described in more detail, below, but generally includes either software or hardware-based processing routines to establish compatible protocol communications between various end-points. The middleware application engine 111 provides instructions to the protocol translation server 113 for facilitating communication between various types of end-point devices. Thus, the protocol translation server 113 and the middleware application engine 111 function effectively as a relay in communications between end-points. The protocol translation server 113 is coupled to the network 115 and communicates using, for example, hypertext transfer protocol (HTTP) messages. However, many other types of communication messaging techniques may be readily employed as well.

The peer-to-peer environment 170 includes a first end-point 117 and a second end-point 119. The first 117 and second 119 end-points can each be a smart-phone, a cellular phone, a standard phone, or various combinations thereof. Further, although the peer-to-peer environment 170 appears to indicate a close proximity of the first 117 and second 119 end-points, a skilled artisan will recognize that each end-point may be dispersed anywhere within or above the world.

With reference now to Fig. 1B, the middleware application engine 111 of Fig. 1A is described in more detail. The middleware application engine 111 includes an application programming interface (API) 153, a protocol conversion engine 155, and a decoder engine 157. The middleware application engine 111 is coupled to a browser 121 through the API 153. As is known independently in the art, the API 153 can be comprised of a set of routines, data structures, object classes or various operational protocols to support the building of applications. Moreover, various forms of the browser 121, such as Internet Explorer^{®}, Netscape Navigator^{®}, or Mozilla^{®} Firefox^{®}, are common and known independently in the art. Further, as is recognizable to a skilled artisan, the browser 121 can be located either proximate to or remotely from the middleware application engine 111. From the browser 121, a programmatic interface is provided by the API 153 to access both the protocol conversion engine 155 and the decoder engine 157.

In a specific exemplary embodiment of the protocol conversion engine 155, the decoder engine 157 samples an attempted communication occurring between, for example, the first end-point 117 and the internal end-point 105A within the first networked environment 110. Since many types of smart-phones use a control protocol such as Session Initiation Protocol (SIP), an underlying transport layer of the attempted communications can be detected prior to an actual communication session. SIP is known independently in the art and is a signaling protocol used to establish and terminate various types of communication sessions for IP-based communications. SIP provides a superset of processing functions and features available over, for example, a PSTN. SIP is a text-based protocol sharing elements with HTTP and runs on the application layer as TCP/IP-based protocol. SIP is designed to be independent of an underlying transport layer and thus can run on a variety of transport layers such as TCP or UDP, described above.

However, since firewalls, especially firewalls with network address translation (NAT) functionality, typically block communication packets such as UDP, the protocol conversion engine 155 converts UDP to another transport layer compatible with the first networked environment 110. For example, a transport layer running packets under UDP can be converted to TCP packets using techniques known independently in the art. Such techniques can involve protocol tunneling. Tunneling is used to carry a payload over an incompatible delivery network. In this case, the payload of a first communication protocol is encapsulated within a second delivery protocol where the second delivery protocol is compatible with the previously incompatible delivery network. Techniques of tunneling can therefore be used to deliver a communication message through a firewall as well since the protocol that may have otherwise blocked the prior protocol, such as UDP, is now encapsulated within a compatible protocol, such as TCP.

Additionally, certain contemporary protocols utilize direct end-point to end-point communication. For example, in a specific exemplary embodiment, Adobe^{®} Systems Incorporated of San Jose, California produces a Real Time Media Flow Protocol (RTMFP) enabling direct end-point to end-point communications when each end-point has a copy of either the Adobe^{®} Flash^{®} Player or applications developed using the Adobe^{®} AIR^{®} framework. The middleware application engine 111 can incorporate portions of one or more of the Adobe^{®} applications within the protocol conversion engine 155 after the decoder engine 157 samples an attempted communication.

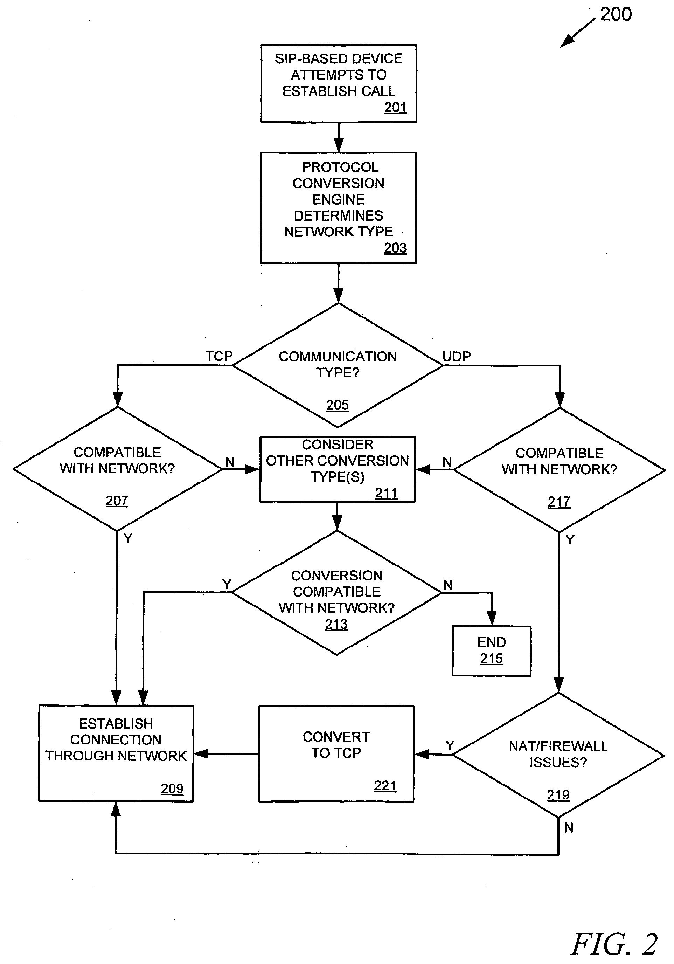

Referring now to Fig. 2, a flow diagram of an exemplary method 200 for establishing communications between end-point devices using intelligent protocol switching is illustrated. Although specific protocols are used for clarity in the exemplary method 200, a skilled artisan will recognize how the method can be used with a variety of protocols.

For example, a SIP-based communication device attempts 201 to establish a call with a second end-point. A protocol conversion engine determines 203 both the underlying protocol of the incoming SIP message and the protocol allowed by a network of the second end-point. A determination is then made 205 whether the communication type of the incoming protocol is TCP-based or UDP-based.

If the determination is made at operation 205 that the incoming protocol is TCP-based, a further determination is made 207 by the protocol conversion engine whether the TCP is compatible with the network of the second end-point. If the TCP is compatible with the network of the second end-point, then a connection is established 209 through the network to the second end-point. If however, the TCP is incompatible with the network of the second end-point, then one or more other conversion types are considered at operation 211. The other conversion types can include, for example, the RTMFP or tunneling techniques discussed above. Another determination is made 213 is made whether the one or more other conversion types are compatible with the network of the second end-point. If the conversion type is compatible, then a connection is established 209 through the network to the second end-point. If a determination is made the conversion is not compatible, then the communication ends 215. Optionally (not shown), one or more loops may be made back to the determination whether one or more other conversion types at operation 211 may be made.

If a determination is made at operation 205 that the incoming protocol is UDP-based, a further determination is made 217 by the protocol conversion engine whether the UDP is compatible with the network of the second end-point. If so, a further determination is made 219 by the protocol conversion engine whether there are any issues with traversing a NAT/firewall at operation 219 at the network of the second end-point. (Note, the TCP may have similar issues but are not considered in this exemplary embodiment merely for issues of clarity.) If there are issues with the NAT/firewall, the UDP can be converted 221 to TCP and a connection is established 209 through the network to the second end-point. Alternatively (not shown), if the TCP conversion is incompatible with the NAT/firewall, other conversion types can be considered at operation 211. If, at operation 217, a determination is made by the protocol conversion engine that the UDP is incompatible with the network of the second end-point, then one or more other conversion types are considered at operation 211 and the exemplary method continues as described, above.

### Application of Intelligent Protocol Switching into an

### Exemplary Network Architecture

Although the various servers, end-points, networks, and other structural and software elements have been defined in terms of a variety of individual structural and software elements, a skilled artisan will recognize that many of the items can be combined or organized in other ways. The description given herein simply provides an exemplary embodiment to aid the reader in an understanding of the systems and methods used herein.

Therefore, while various embodiments of the inventive subject matter described herein are described with reference to assorted implementations and exploitations, it will be understood that these embodiments are illustrative only and that a scope of the present inventions is not limited merely to those described embodiments. Moreover, a skilled artisan will recognize that the automatic selection and conversion of communication protocols, using various systems and methods described herein, may be implemented with any consistent hardware or software systems either defined herein or known independently in the art using techniques described herein. Many variations, modifications, additions, and improvements are therefore possible.

### Modules, Components, and Logic

Additionally, certain embodiments described herein may be implemented as logic or a number of modules, components, or mechanisms. A module, logic, component, engine, or mechanism (collectively referred to as a "module") may be a tangible unit capable of performing certain operations and is configured or arranged in a certain manner. In certain exemplary embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor) to perform certain operations. A module may also comprise programmable logic or circuitry (e.g., as encompassed within a general-purpose processor or other programmable processor) that is temporarily configured by software or firmware to perform certain operations. It will be appreciated that a decision to implement a module mechanically, in the dedicated and permanently configured circuitry, or in temporarily configured circuitry (e.g., configured by software) may be driven by cost and time considerations.

Accordingly, the term module should be understood to encompass a tangible entity, be that an entity that is physically constructed, permanently configured (e.g., hardwired), or temporarily configured (e.g., programmed) to operate in a certain manner and/or to perform certain operations described herein. Considering embodiments in which modules or components are temporarily configured (e.g., programmed), each of the modules or components need not be configured or instantiated at any one instance in time. For example, where the modules or components comprise a general-purpose processor configured using software, the general-purpose processor may be configured as respective different modules at different times. Software may accordingly configure the processor to constitute a particular module at one instance of time and to constitute a different module at a different instance of time.

Modules can provide information to, and receive information from, other modules. Accordingly, the described modules may be regarded as being communicatively coupled. Where multiples of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation, and store the output of that operation in a memory device to which it is communicatively coupled. A further module may then, at a later time, access the memory device to retrieve and process the stored output. Modules may also initiate communications with input or output devices and can operate on a resource (e.g., a collection of information).

### Exemplary Machine Architecture and Machine-Readable Medium

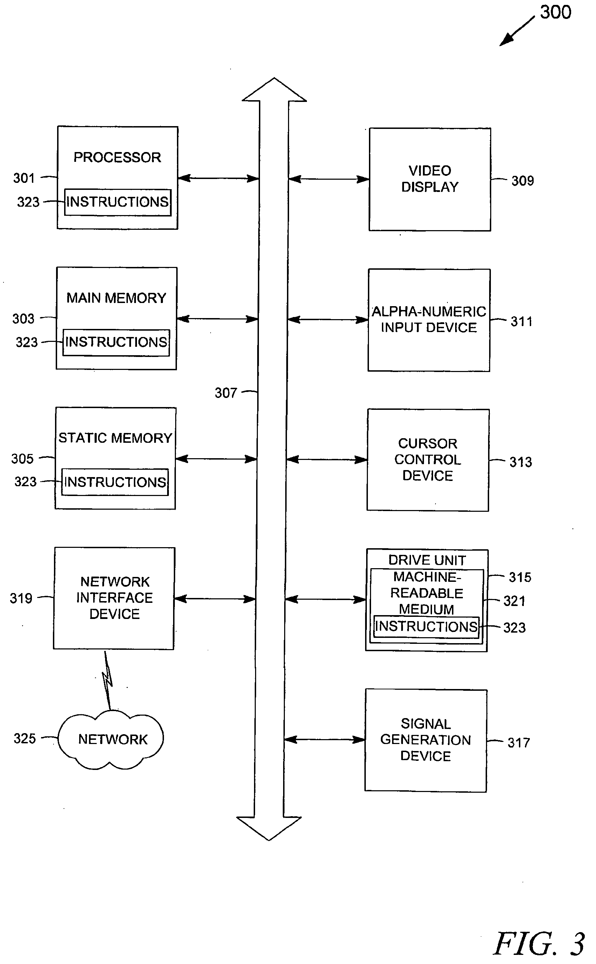

With reference to Fig. 3, an exemplary embodiment extends to a machine in the form of an exemplary computer system 300 within which instructions, for causing the machine to perform any one or more of the methodologies discussed herein, may be executed. In alternative exemplary embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, a switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 300 includes a processor 301 (e.g., a central processing unit (CPU), a graphics processing unit (GPU) or both), a main memory 303 and a static memory 305, which communicate with each other via a bus 307. The exemplary computer system 300 may further include a video display unit 309 (e.g., a liquid crystal display (LCD) or a cathode ray tube (CRT)). The exemplary computer system 300 also includes an alphanumeric input device 311 (e.g., a keyboard), a user interface (UI) navigation device 313 (e.g., a mouse), a disk drive unit 315, a signal generation device 317 (e.g., a speaker), and a network interface device 319.

### Machine-Readable Medium

The disk drive unit 315 includes, for example, a non-transitory machine-readable storage medium 321 on which is stored one or more sets of instructions 323 and data structures (e.g., software) embodying or used by any one or more of the methodologies or functions described herein. The software 323 may also reside, completely or at least partially, within the main memory 303 or within the processor 301 during execution thereof by the exemplary computer system 300; the main memory 303 and the processor 301 also constituting machine-readable media.

While the machine-readable storage medium 321 is shown in an exemplary embodiment to be a single medium, the term "machine-readable storage medium" may include a single medium or multiple media (e.g., a centralized or distributed database, or associated caches and servers) that store the one or more instructions. The term "machine-readable storage medium" shall also be taken to include any tangible medium that is capable of storing, encoding, or carrying instructions for execution by the machine and that cause the machine to perform any one or more of the methodologies of the present invention, or that is capable of storing, encoding, or carrying data structures used by or associated with such instructions. The term "machine-readable storage medium" shall accordingly be taken to include, but not be limited to, solid-state memories, and optical and magnetic media. Specific examples of machine-readable media include non-volatile memory, including by way of exemplary semiconductor memory devices (e.g., EPROM, EEPROM, and flash memory devices); magnetic disks such as internal hard disks and removable disks; magneto-optical disks; and CD-ROM and DVD-ROM disks.

### Transmission Medium

The software 323 may further be transmitted or received over a communications network 325 using a transmission medium via the network interface device 319 utilizing any one of a number of well-known transfer protocols (e.g., HTTP). Examples of communication networks include a local area network (LAN), a wide area network (WAN), the Internet, mobile telephone networks, Plain Old Telephone (POTS) networks, and wireless data networks (e.g., WiFi and WiMax networks). The term "transmission medium" shall be taken to include any intangible medium that is capable of storing, encoding, or carrying instructions for execution by the machine, and includes digital or analog communications signals or other intangible medium to facilitate communication of such software.

Although an overview of the inventive subject matter has been described with reference to specific exemplary embodiments, various modifications and changes may be made to these embodiments without departing from the scope of the present invention. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present invention. In general, structures and functionality presented as separate resources in the exemplary configurations may be implemented as a combined structure or resource. Similarly, structures and functionality presented as a single resource may be implemented as separate resources.

The specification and drawings are, accordingly, to be regarded in an illustrative rather than a restrictive sense.

## Claims

1. A translation environment (150) for a network architecture, the network architecture including a first and second networked environment (110, 130), each having a first and second network respectively, wherein the first and second networked environments (110, 130) and translation environment are coupled to one another by the Internet, the translation environment to select automatically a compatible communication protocol between the first and second communication networks (107A, 115, 107B), the translation environment (150) comprising:
an application engine (111), using one or more processors (301), configured to receive, via the Internet (115), an attempted communication from a first end-point of the first networked environment to a second end-point of the second networked environment, the application engine (111) including:
a decoder engine (157) configured to sample the received attempted communication; and
a protocol conversion engine (155) configured to:
determine an underlying transport protocol of the received attempted communication; determine a protocol allowed by the second network of the second networked environment; and
convert the underlying transport protocol of the received attempted communication to be compatible with the second network of the second networked environment, and wherein the application engine is further configured to establish a connection with the second end-point (105A, 105B) via the Internet (115).

2. The translation environment of claim 1, wherein the protocol conversion engine is configured to determine the underlying transport layer of the received attempted communication prior to an actual communications session.

3. The translation environment of claim 1, wherein the protocol conversion engine (155) is further configured to encapsulate a payload of the received attempted communication within the second protocol supported by the second network of the second networked environment..

4. The translation environment of claim 1, wherein the protocol conversion engine (155) is further configured to make a determination that a firewall is associated with the second network, and based on the determination that the firewall is associated with the second network, the protocol conversion engine (155) is further configured to convert an underlying transport protocol of the attempted communication to traverse the firewall.

5. The translation environment of claim 1, further comprising an application programming interface (153) configured to allow communication between a browser and the protocol conversion engine (155).

6. A conversion method of automatically selecting compatible communication protocols between communications networks, the method, being performed by an application engine in a translation environment coupled to a first and second networked environments (110, 130) by the Internet, comprising:
receiving, via the Internet, an attempted communication from a first end-point of the first networked environment to a second end-point of the second networked environment;
sampling the received attempted communication;
determining an underlying transport protocol of the received attempted communication; determining a protocol allowed by a network of the second networked environment;
converting the underlying transport protocol of the received attempted communication to be compatible with the network of the second networked environment;, and
establishing a connection to the second end-point (105A, 105B) via the Internet.

7. The method of claim 6, wherein the step of determining the underlying transport protocol of the received attempted communication is prior to an actual communication session.

8. The method of claim 6, further comprising encapsulating a payload of the received attempted communication within the second protocol associated with the second network of the second networked environment.

9. The method of claim 6, further comprising:
making a determination that a firewall is associated with the second network that may block the attempted communication from the first end-point; and
based on the determination that the firewall is associated with the second network, converting an underlying transport protocol of the attempted communication to traverse the firewall.

10. A non-transitory machine-readable storage medium comprising instructions that, when executed by one or more processors (301), cause the one or more processors (301) to perform a method of any one of Claims 6 to 9.

## Patentansprüche

1. Umsetzungs-Umgebung (150) für eine Netzwerkarchitektur, wobei die Netzwerk-Architektur eine erste und eine zweite vernetzte Umgebung (110, 130) beinhaltet, die ein erstes beziehungsweise ein zweites Netzwerk aufweisen, wobei die erste und die zweite vernetzte Umgebung (110, 130) und die Umsetzungs-Umgebung durch das Internet untereinander verbunden sind, wobei die Umsetzungs-Umgebung dazu dient, automatisch ein kompatibles Kommunikations-Protokoll zwischen dem ersten und dem zweiten Kommunikations-Netzwerk (107A, 115, 107B) auszuwählen,
wobei die Umsetzungs-Umgebung (150) umfasst:
eine Anwendungsmaschine (111), bei der ein Prozessor oder mehrere Prozessoren (301) verwendet sind, die dazu konfiguriert ist, über das Internet (115) eine versuchte Kommunikation von einem ersten Endpunkt der ersten vernetzten Umgebung zu einem zweiten Endpunkt der zweiten vernetzten Umgebung zu empfangen, wobei die Anwendungsmaschine (111) beinhaltet:
eine Decodermaschine (157), die dazu konfiguriert ist, die empfangene versuchte Kommunikation zu prüfen,
und
eine Protokoll-Umwandlungsmaschine (155), die konfiguriert ist zum
Ermitteln eines zugrundeliegenden Transportprotokolls der empfangenen versuchten Kommunikation,
Ermitteln eines durch das zweite Netzwerk der zweiten vernetzten Umgebung erlaubten Protokolls
und
Umwandeln des zugrundeliegenden Transportprotokolls der empfangenen versuchten Kommunikation in der Weise, dass es mit dem zweiten Netzwerk der zweiten vernetzten Umgebung kompatibel ist,
und wobei die Anwendungsmaschine ferner dazu konfiguriert ist, eine Verbindung mit dem zweiten Endpunkt (105A, 105B) über das Internet (115) herzustellen.

2. Umsetzungs-Umgebung von Anspruch 1, bei der die Protokoll-Umwandlungsmaschine dazu konfiguriert ist, vor einer eigentlichen Kommunikations-Sitzung die zugrundeliegende Transportschicht der empfangenen versuchten Kommunikation zu ermitteln.

3. Umsetzungs-Umgebung von Anspruch 1, bei der die Protokoll-Umwandlungsmaschine (155) ferner dazu konfiguriert ist, Nutzdaten der empfangenen versuchten Kommunikation in dem zweiten Protokoll einzukapseln, das durch das zweite Netzwerk der zweiten vernetzten Umgebung unterstützt wird.

4. Umsetzungs-Umgebung von Anspruch 1, bei der die Protokoll-Umwandlungsmaschine (155) ferner dazu konfiguriert ist, eine Feststellung zu treffen, dass eine Firewall mit dem zweiten Netzwerk verbunden ist, und die Protokoll-Umwandlungsmaschine (155) ferner dazu konfiguriert ist, auf der Basis der Feststellung, dass die Firewall mit dem zweiten Netzwerk verbunden ist, ein zugrundeliegendes Transportprotokoll der versuchten Kommunikation so umzuwandeln, dass die Firewall passiert wird.

5. Umsetzungs-Umgebung von Anspruch 1, die ferner ein Anwendungsprogrammierungs-Interface (153) aufweist, das dazu konfiguriert ist, eine Kommunikation zwischen einem Browser und der Protokoll-Umwandlungsmaschine (155) zu erlauben.

6. Umwandlungs-Verfahren zur automatischen Wahl von kompatiblen Kommunikations-Protokollen zwischen Kommunikations-Netzwerken, wobei das Verfahren durch eine Anwendungsmaschine in einer Umsetzungs-Umgebung durchgeführt wird, die mit einer ersten und einer zweiten vernetzten Umgebung (110, 130) durch das Internet verbunden ist,
das umfasst:
Empfangen einer versuchten Kommunikation von einem ersten Endpunkt der ersten vernetzten Umgebung mit einem zweiten Endpunkt der zweiten vernetzten Umgebung über das Internet,
Prüfen der empfangenen versuchten Kommunikation,
Ermitteln eines zugrundeliegenden Transportprotokolls der empfangenen versuchten Kommunikation,
Ermitteln eines Protokolls, das durch ein Netzwerk der zweiten vernetzten Umgebung erlaubt wird,
Umwandeln des zugrundeliegenden Transportprotokolls der versuchten Kommunikation in der Weise, dass es mit dem Netzwerk der zweiten vernetzten Umgebung kompatibel ist,
und
Herstellen einer Verbindung mit dem zweiten Endpunkt (105A, 105B) über das Internet.

7. Verfahren von Anspruch 6, bei dem der Schritt des Ermittelns des zugrundeliegenden Transportprotokolls der empfangenen versuchten Kommunikation vor einer eigentlichen Kommunikations-Sitzung erfolgt.

8. Verfahren von Anspruch 6, das ferner das Einkapseln von Nutzdaten der empfangenen versuchten Kommunikation in dem zweiten Protokoll umfasst, das mit dem zweiten Netzwerk der zweiten vernetzten Umgebung verbunden ist.

9. Verfahren von Anspruch 6, das ferner umfasst:
Treffen einer Feststellung, dass eine Firewall mit dem zweiten Netzwerk verbunden ist, welche die versuchte Kommunikation von dem ersten Endpunkt blockieren kann,
und
auf der Basis der Feststellung, dass die Firewall mit dem zweiten Netzwerk verbunden ist, Umwandeln eines zugrundeliegenden Transportprotokolls der versuchten Kommunikation in der Weise, dass die Firewall passiert wird.

10. Nichtflüchtiges, maschinenlesbares Speichermedium, das Befehle enthält, die bei Ausführung durch einen Prozessor oder mehrere Prozessoren (301) den einen Prozessor oder die mehreren Prozessoren (301) veranlassen, ein Verfahren von einem der Ansprüche 6 bis 9 durchzuführen.

## Revendications

1. Environnement de traduction (150) pour une architecture de réseau, l'architecture de réseau incluant des premier et second environnements mis en réseau (110, 130), lesquels présentent chacun des premier et second réseaux, respectivement, dans lequel les premier et second environnements mis en réseau (110, 130) et l'environnement de traduction sont couplés mutuellement par l'intermédiaire d'Internet, l'environnement de traduction étant destiné à sélectionner automatiquement un protocole de communication compatible entre les premier et second réseaux de communication (107A, 115, 107B), l'environnement de traduction (150) comprenant :
un moteur d'application (111), utilisant un ou plusieurs processeurs (301), configuré de manière à recevoir, par l'intermédiaire d'Internet (115), une tentative de communication d'un premier point d'extrémité du premier environnement mis en réseau à un second point d'extrémité du second environnement mis en réseau, le moteur d'application (111) incluant :
un moteur de décodeur (157) configuré de manière à échantillonner la tentative de communication reçue ; et
un moteur de conversion de protocoles (155) configuré de manière à :
déterminer un protocole de transport sous-jacent de la tentative de communication reçue ;
déterminer un protocole autorisé par le second réseau du second environnement mis en réseau ; et
convertir le protocole de transport sous-jacent de la tentative de communication reçue afin qu'il soit compatible avec le second réseau du second environnement mis en réseau ; et
dans lequel le moteur d'application est en outre configuré de manière à établir une connexion avec le second point d'extrémité (105A, 105B) par l'intermédiaire d'Internet (115).

2. Environnement de traduction selon la revendication 1, dans lequel le moteur de conversion de protocoles est configuré de manière à déterminer la couche de transport sous-jacente de la tentative de communication reçue, avant une session de communication en cours.

3. Environnement de traduction selon la revendication 1, dans lequel le moteur de conversion de protocoles (155) est en outre configuré de manière à encapsuler une charge utile de la tentative de communication reçue au sein du second protocole pris en charge par le second réseau du second environnement mis en réseau.

4. Environnement de traduction selon la revendication 1, dans lequel le moteur de conversion de protocoles (155) est en outre configuré de manière à déterminer qu'un pare-feu est associé au second réseau, et sur la base de la détermination selon laquelle le pare-feu est associé au second réseau, le moteur de conversion de protocoles (155) est en outre configuré de manière à convertir un protocole de transport sous-jacent de la tentative de communication en vue de traverser le pare-feu.

5. Environnement de traduction selon la revendication 1, comprenant en outre une interface de programmation d'applications (153) configurée de manière à permettre la communication entre un navigateur et le moteur de conversion de protocoles (155).

6. Procédé de conversion pour sélectionner automatiquement des protocoles de communication compatibles entre des réseaux de communication, le procédé étant mis en oeuvre par un moteur d'application dans un environnement de traduction couplé à des premier et second environnements mis en réseau (110, 130) par l'intermédiaire d'Internet, comprenant les étapes ci-dessous consistant à :
recevoir, par l'intermédiaire d'Internet, une tentative de communication, d'un premier point d'extrémité du premier environnement mis en réseau à un second point d'extrémité du second environnement mis en réseau ;
échantillonner la tentative de communication reçue ;
déterminer un protocole de transport sous-jacent de la tentative de communication reçue ;
déterminer un protocole autorisé par un réseau du second environnement mis en réseau ; et
convertir le protocole de transport sous-jacent de la tentative de communication reçue afin qu'il soit compatible avec le second réseau du second environnement mis en réseau ; et
établir une connexion avec le second point d'extrémité (105A, 105B) par l'intermédiaire d'Internet.

7. Procédé selon la revendication 6, dans lequel l'étape de détermination du protocole de transport sous-jacent de la tentative de communication reçue est antérieure à une session de communication en cours.

8. Procédé selon la revendication 6, comprenant en outre l'étape consistant à encapsuler une charge utile de la tentative de communication reçue au sein du second protocole associé au second réseau du second environnement mis en réseau.

9. Procédé selon la revendication 6, comprenant en outre les étapes ci-dessous consistant à :
déterminer qu'un pare-feu est associé au second réseau, lequel peut bloquer la tentative de communication à partir du premier point d'extrémité ; et
sur la base de la détermination selon laquelle le pare-feu est associé au second réseau, convertir un protocole de transport sous-jacent de la tentative de communication en vue de traverser le pare-feu.

10. Support de stockage lisible par machine non transitoire comprenant des instructions qui, lorsqu'elles sont exécutées par un ou plusieurs processeurs (301), amènent ledit un ou lesdits plusieurs processeurs (301) à mettre en oeuvre un procédé selon l'une quelconque des revendications 6 à 9.
